# EUROPÄISCHE PATENTANMELDUNG

(11) **EP 1 506 853 A2**
(43) Veröffentlichungstag der Anmeldung: **16.02.2005**
(21) Anmeldenummer: 04017082.1
(22) Anmeldetag: 20.07.2004
(51) Int. Cl.: B32B 31/00, B32B 3/02

(54) **Verfahren zur Herstellung von Sicherheitsfolie**

(30) Priorität: 13.08.2003 DE 10337405
(71) Anmelder: Giesecke & Devrient GmbH, 81677 München (DE)
(72) Erfinder: Hoffmann, Lars, Dr., 85334 Freising (DE)

(57) **Zusammenfassung**

Die Erfindung betrifft ein Verfahren, eine Vorrichtung zur Herstellung von Sicherheitsfolie sowie die Sicherheitsfolie selbst.
Das Verfahren beinhaltet die Folgenden Schritte
- Bereitstellen einer Trägerfolie (1) mit Randbereichen und einem Mittelbereich;
- Beschichten der Trägerfolie (1) im Mittelbereich;
- Sonderbehandlung der Randbereiche der Trägerfolie (1) zum Vermeiden von Dickenunterschieden zwischen den Randbereichen und dem Mittelbereich der Trägerfolie (1).

## Beschreibung

Die Erfindung betrifft ein Verfahren, eine Vorrichtung zur Herstellung von Sicherheitsfolie sowie die Sicherheitsfolie selbst.

In Banknoten und andere geldwerte Papiere, wie Aktien, Schecks, Reiseschecks, Scheck- oder Kreditkarten, oder in andere fälschungsgefährdete Papiere, wie Pässe und sonstige Identitätskarten, wird oft ein Sicherheitselement zur Erhöhung der Fälschungssicherheit ein- oder aufgebracht. Bei dem Sicherheitselement kann es sich beispielsweise um einen in einer Banknote eingebetteten Sicherheitsfaden, einen aufgebrachten Sicherheitsstreifen oder ein selbsttragendes Element, wie ein Transferelement, ein Patch oder ein Etikett, handeln, das nach seiner Herstellung mit dem zu sichernden Gegenstand fest verbunden wird.

Die Sicherheitselemente sind üblicherweise ein- oder mehrschichtig aufgebaut, wobei der Schichtaufbau der Sicherheitselemente auf einer Endlosfolie, deren Breite oft ein Vielfaches der Breite des Sicherheitselements entspricht, vorbereitet wird. Die Endlosfolie wird im Folgenden als Sicherheitsfolie bezeichnet.

Zur Herstellung der Sicherheitsfolie durchläuft diese, je nach gewünschter Ausstattung, verschiedene Vorrichtungsstationen, an denen die Sicherheitsfolie z.B. mit den gewünschten Eigenschaften ausgestattet wird. Beispielsweise können die Sicherheitsfolien eine flächige, metallisch reflektierende Beschichtung, gegebenenfalls mit Aussparungen, eine thermochrome Beschichtung, Beugungsstrukturen, wie Hologramme, lumineszierende Substanzen etc. aufweisen.

Bei der Weiterbearbeitung der Sicherheitsfolie zu Sicherheitselementen kann die Folie beispielsweise in einzelne Streifen geschnitten werden, die als Sicherheitsfäden in das Papier ein- oder als Sicherheitsstreifen auf das Papier aufgebracht werden.

In der EP 0 930174 B1 wird ein Verfahren zur Herstellung einer Sicherheitsfolie beschrieben, die aus einer lichtdurchlässigen Trägerfolie aus Kunststoff mit zumindest teilweise opaker Beschichtung besteht, wobei die Beschichtung lichtdurchlässige Bereiche in Form von visuell und/oder maschinell lesbaren Zeichen oder Mustern aufweist.

Den aus dem Stand der Technik bekannten Verfahren zur Herstellung von Sicherheitsfolie ist gemeinsam, dass die Beschichtung auf der Folie zur Herstellung des Sicherheitselementschichtaufbaus aus verfahrenstechnischen Gründen nur im Mittelbereich der Folienbahn ausgeführt wird, d.h. dass die Endlosbahn nicht über ihre gesamte Breite beschichtet wird, sondern die Ränder unbeschichtet bleiben. Einer der Gründe hierfür ist z.B., dass Verunreinigungen von Druckzylindern, Transportwalzen, Umlenkrollen etc. durch über die Ränder überquellende Farben und Lacke beim Bedrucken der Folie vermieden werden sollen.

Allerdings führt die nur im Mittelbereich vorliegende Beschichtung zu Dickenunterschieden über die Breite der beschichteten Folienbahn, was bei vielen nachfolgenden Bearbeitungsschritten, insbesondere beim Auf- und Abwickeln auf Rollen, zu kleinen Falten und/oder Rissen in der Folien führt.

Aufgabe der vorliegenden Erfindung ist es, ein Verfahren und eine Vorrichtung zur Herstellung von Sicherheitsfolie zur Verfügung zu stellen, die die genannten Nachteile des Standes der Technik vermeiden.

Eine weitere Aufgabe besteht darin, eine Sicherheitsfolie bereitzustellen, die nach dem erfindungsgemäßen Verfahren hergestellt wird.

Diese Aufgaben werden durch die Merkmale der nebengeordneten Ansprüche gelöst. Weiterbildungen der Erfindung sind Gegenstand der Unteransprüche.

Gemäß dem erfindungsgemäßen Verfahren zur Herstellung einer Sicherheitsfolie wird zunächst eine Trägerfolie bereitgestellt. Die Trägerfolie wird im Mittelbereich beschichtet und die Randbereiche einer Sonderbehandlung zur Vermeidung von Dickenunterschieden zwischen den Randbereichen und dem Mittelbereich unterzogen.

Im Sinne der Erfindung ist unter "Mittelbereich" der Bereich auf der Folie zu verstehen, der mit dem Schichtaufbau für das spätere Sicherheitselement beschichtet ist. Über die Breite der Trägerfolie gesehen erstreckt sich der Mittelbereich nicht bis an die Längskanten der Trägerfolie. Die an den beiden Längskanten entlang laufenden unbeschichteten Bereiche der Trägerfolie werden im Sinne der Erfindung als "Randbereiche" bezeichnet.

Der Mittelbereich weist üblicherweise eine Breite von 500 bis 2000 mm auf, kann aber je nach Beschichtungsverfahren auch breiter oder schmäler ausfallen. Je nach Beschichtungsverfahren liegt die Dicke der Beschichtung üblicherweise im Bereich von ca. 1µm bis 50 µm.

Die Randbereiche weisen üblicherweise eine Breite von 1 bis 10 cm auf, können aber je nach Beschichtungsverfahren auch breiter oder schmäler ausfallen.

Als Trägerfolie dient vorzugsweise eine Kunststofffolie, besonders bevorzugt eine transluzente bzw. transparente Kunststofffolie. Die Kunststofffolie ist vorzugsweise aus Polyester. Andere Kunststoffe können jedoch ebenfalls verwendet werden. Die Dicke der Trägerfolie liegt vorzugsweise im Bereich von etwa 6 bis 36 µm. Die Trägerfolie wird üblicherweise in Form endloser Bahnen hergestellt und bearbeitet.

Die Beschichtung der Trägerfolie kann beispielsweise durch einen Druckvorgang, Aufdampfen oder Laminieren mit Folien erfolgen.

Die Beschichtung der Randbereiche und des Mittelbereichs kann mit den selben aber auch völlig anderen Materialien erfolgen. Auch die Gestaltung der Beschichtungen im Randbereich mit Mustern, Rasterpunkten oder Ähnlichem kann unabhängig von der Gestaltung der Beschichtung im Mittelbereich erfolgen.

Das Bedrucken der Folie kann mit jedem geeigneten Druckverfahren erfolgen. Vorzugsweise wird das Tiefdruckverfahren eingesetzt. Beispielsweise werden bei der Herstellung der Sicherheitsfolien Lackschichten, in die Beugungsstrukturen geprägt werden können, Schutzlackschichten, Farbschichten, Metalleffektfarben, leitfähige Substanzen, wie Polymere, magnetische Substanzen, lumineszierende Substanzen etc. verdruckt.

Das Bedampfen der Folien erfolgt vorzugsweise im Vakuum. Die Folie kann beispielsweise mit Metall, vorzugsweise Aluminium, und/ oder mit transparenten Schichten unterschiedlicher Brechungsindices zur Herstellung von Farb-Kippeffekten bedampft werden.

Beim Laminieren von Folien wird auf die gegebenenfalls bereits mit einer aufgedruckten bzw. aufgedampften Beschichtung versehene Folie eine weitere Folie - meist aus Gründen des Schutzes - aufgebracht. Die auflaminierte Folie ist vorzugsweise äußerst dünn, z.B. ca. 6 µm.

Selbstverständlich besteht auch die Möglichkeit, Druck- , Aufdampf- und Laminiervorgänge bei der Herstellung einer Sicherheitsfolie zu kombinieren.

Bei der Sonderbehandlung zur Vermeidung von Dickenunterschieden zwischen den Randbereichen und dem Mittelbereich kann gemäß der vorliegenden Erfindung wie im Folgenden beschrieben vorgegangen werden:
In einer ersten Ausführungsform wird erfindungsgemäß die Trägerfolie in den Randbereichen mit eine Beschichtung versehen, die vorzugsweise in einem eigenen Fertigungschritt aufgebracht wird. Die Dicke der Beschichtung hat vorzugsweise die Dicke der vorgesehenen Beschichtung im Mittelbereich der Folienbahn. Die zeitliche Reihenfolge der Randbeschichtung und der Mittelbereichsbeschichtung ist erfindungsgemäß nicht festgelegt und kann unter anderem nach technologischen und/ oder logistischen Aspekten erfolgen. Für die Beschichtung der Randbereiche wird vorzugsweise ein Herstellungsverfahren gewählt, das sich für eine Beschichtung bis zu den Folienbahnkanten besonders eignet.

Ist die Dicke der Beschichtung im Mittelbereich über die Breite der Trägerfolie im Wesentlichen konstant, so ist vorzugsweise die Dicke der Beschichtung der Randbereiche ebenfalls im Wesentlichen konstant und schließt vorzugsweise direkt daran an. Denkbar ist aber auch ein nur teilweises Beschichten über die Breite der Randbereiche. Es ist vorzugsweise bei der Auslegung der Herstellungsprozesse darauf zu achten, dass es zu keiner Überlappung der Beschichtungen der Randbereiche und der Beschichtung des Mittelbereichs kommt. Mögliche Beschichtungsverfahren für die Randbereiche sind beispielsweise das Auflaminieren eines Folienstreifen im jeweiligen Randbereich.

Fällt dagegen die Dicke der Beschichtung im Mittelbereich zu den Randbereichen hin ab, so wird vorzugsweise eine Beschichtung in den Randbereichen aufgebracht, deren Dicke zum Mittelbereich hin abfällt. Dabei überlappen sich die Beschichtungen des Mittelbereichs und der Randbereiche vorzugsweise so, dass eine gleichmäßige Schichtdicke über die gesamte Folienbahnbreite resultiert. In einer Ausführungsvariante kann die Randbeschichtung mit dem in der Schichtdicke abfallenden Übergangsbereich durch einen Druckvorgang hergestellt werden.

In einer zweiten Ausführungsform wird die Beschichtung des Mittelbereichs in einer Weise ausgeführt, dass sie bis an die beiden Kanten der Trägerfolie heranreicht. Damit fällt die gesonderte Behandlung der Randbereiche mit der Beschichtung des Mittelbereichs zusammen. Dies hat den Vorteil, dass die gesamte Breite der Trägerfolie ausgenutzt werden kann, ein Herstellungsschritt eingespart werden kann und bei der Weiterverarbeitung der Sicherheitsfolie zu beispielsweise Sicherheitsfäden kein oder kaum Verschnitt anfällt.

In einer dritten Ausführungsform werden die Randbereiche nach dem Aufbringen der Beschichtung im Mittelbereich zumindest teilweise abgetrennt. Die Abtrennung erfolgt vorzugsweise durch mechanisches Schneiden. Denkbar ist auch ein Abquetschen, Laserstrahlschneiden etc.

Vorzugsweise werden die Randbereiche parallel zu den Längskanten der Trägerfolie abgeschnitten, wobei die Randbereiche vollständig entfernt werden können oder ein Teil der Randbereiche stehen gelassen werden kann, solange dieser nicht bei den weiteren Arbeitsschritten zu Störungen im Folienmaterial führt. Nicht entfernte Randbereiche von wenigen Millimetern sind in diesem Zusammenhang nicht schädlich. Selbstverständlich kann auch ein Teil des beschichteten Mittelbereichs mit entfernt werden, so dass sich die Beschichtung des Mittelbereichs über die ganze Breite der beschnittenen Folie erstreckt.

Allen genannten Ausführungsformen ist gemeinsam, dass Maßnahmen ergriffen werden, um zu gewährleisten, dass die gesamte Breite der Folienbahn eine gleichmäßige Schichtdicke aufweist. Dadurch ist ein Aufwickeln der Folienbahn auf eine Rolle problemlos möglich, ohne dass beispielsweise Falten oder andere Störstellen entstehen.

Weitere Gegenstände der Erfindung sind eine Vorrichtung zur Durchführung der erfindungsgemäßen Verfahren, die je eine Einrichtung zum Bereitstellen der Trägerfolie, zum Beschichten der Trägerfolie zumindest im Mittelbereich und zur Sonderbehandlung der Randbereiche der Trägerfolie umfasst, und eine nach dem erfindungsgemäßen Verfahren hergestellte Sicherheitsfolie. Die erfindungsgemäße Sicherheitsfolie zeichnet sich durch eine besonders faltenfreie Oberfläche aus, insbesondere wenn es sich um einen laminierten mehrschichtigen Folienverbund handelt.

Weitere Vorteile und Ausführungsformen der Sicherheitsfolie werden anhand der Figuren erläutert. Die in den Figuren gezeigten Proportionen entsprechen nicht unbedingt den in der Realität vorliegenden Verhältnissen und dienen vornehmlich zur Verbesserung der Anschaulichkeit.

Die Figuren zeigen:
- Fig. 1a, 1b: Querschnitt durch eine Sicherheitsfolie nach verschiedenen Herstellungsschritten,
- Fig. 2: Querschnitt durch eine Sicherheitsfolie,
- Fig. 3: Querschnitt durch eine Sicherheitsfolie mit Beschichtung über die gesamte Breite der Folienbahn,
- Fig. 4: Querschnitt durch eine Sicherheitsfolie mit unbeschichteten, abzutrennenden Randbereichen.

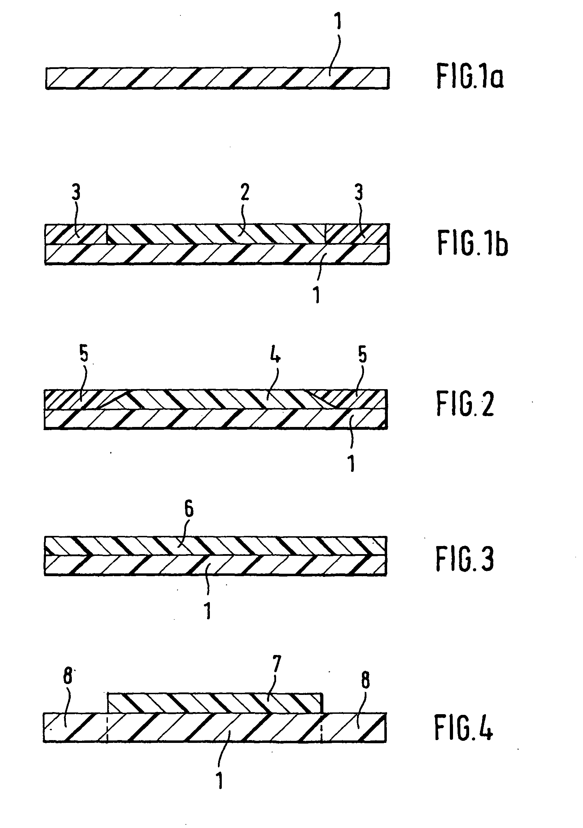

Fig. 1 zeigt einen Schnitt durch eine Sicherheitsfolie nach verschiedenen Herstellungsschritten.

In Fig. 1a) ist die Trägerfolie 1 dargestellt. Sie ist vorzugsweise eine transparente Kunststofffolie. In Fig. 1b) wurde die Beschichtung 2 im Mittelbereich aufgebracht. Die Dicke der Beschichtung 2 im Mittelbereich hat vorzugsweise die gleiche Dicke wie die Randbeschichtungen 3. Die Randbeschichtung kann durch Aufdrucken von Farbe, das Auflaminieren von zwei Folienstreifen oder ein anderes geeignetes Verfahren geschehen. Die Beschichtungen im Randbereich zeichnen sich dadurch aus, dass sie eine konstante Dicke aufweisen und zum Mittelbereich der Trägerfolie hin scharfkantig sind. In der Praxis liegt die Dicke der Beschichtungen 2, 3 oftmals in der gleichen Größenordnung wie die Dicke der Trägerfolie 1.

Vorzugsweise erfolgt die Beschichtung des Mittelbereichs und der Randbereiche direkt hintereinander, ohne dass die Folienbahn dazwischen auf eine Rolle aufgewickelt wird. Es ist auch möglich die Beschichtungsschritte im zeitlichen Ablauf zu vertauschen oder weitere Herstellungschritte, wie z.B. Reinigen, dazwischenzuschalten.

Fig. 2 zeigt die Trägerfolie 1 mit einer Beschichtung 4 im Mittelbereich, deren Dicke zu den Randbereichen 5 hin nicht scharfkantig begrenzt ist, sondern kontinuierlich ab fällt. Der Abfall der Schichtdicke an den Rändern des Mittelbereichs 4 wird durch den keilförmigen Querschnitt der Randbeschichtungen 5 kompensiert. Über den zeitlichen Ablauf der Herstellungsschritte gilt das Gleiche wie in Figur 1.

Eine weitere Ausführungsform zeigt Fig. 3. Ausgangspunkt ist wieder die Trägerfolie 1, auf die eine über die gesamte Breite der Trägerfolie 1 reichende Beschichtung 6 aufgebracht wurde. Technisch möglich ist das beispielsweise beim Laminieren einer Folienbahn gleicher Breite auf die Trägerfolie.

Eine weitere bevorzugte Ausführungsform der Erfindung ist in Fig. 4 dargestellt. Die Trägerfolie 1 ist im Mittelbereich mit einer Beschichtung 7 versehen. Bedingt durch das Beschichtungsverfahren bleiben die Randbereiche 8 unbeschichtet. Diese werden von der Trägerfolie 1 abgetrennt. Die Trennstellen sind durch gestrichelte Linien markiert. Das kann beispielsweise durch mechanisches Schneiden geschehen.

Bei der Herstellung von metallisierten Sicherheitsfolien kann erfindungsgemäß folgendermaßen vorgegangen werden. Bei der Trägerfolie 1 handelt es sich z.B. um eine ca. 12 µm dicke Polyesterfolie, die in einem ersten Arbeitsgang im Mittelbereich z.B. mit einem optisch lesbaren Druckmotiv oder einer Lackschicht bedruckt wurde. Der bedruckte Bereich ist schmäler als die Breite der Trägerfolie 1. Hier wurde mit einer Druckbreite von 750 mm auf 810 mm Folienbreite gearbeitet. Verunreinigungen des Druckzylinders durch überquellende Druckfarbe bzw. Lack werden so vermieden. Die Schichtdicke der Druckschicht liegt üblicherweise im Bereich von ca. 1 bis 20 µm. Um beim Aufwickeln der bedruckten Bahn eine uneinheitliche Wickelhärte zwischen dem bedruckten Mittelbereich und den unbedruckten Randbereichen zu verhindern, werden erfindungsgemäß die Randbereiche vorzugsweise vor dem Aufwickeln der beschichteten Trägerfolie mechanisch abgeschnitten.

Bei sehr dünnen Druckschichten können die Randbereiche erst nach weiteren Bearbeitungsschritten entfernt werden. Die bedruckte Trägerfolie mit unbedruckten Randbereichen kann z.B. erst einer Metallisierungsstation zugeführt werden, in der die bedruckte Folienbahn im Vakuum mit dem gewünschten Metall, vorzugsweise Aluminium, beschichtet wird. Die Bedampfung erfolgt, wie die Ab- und Aufwicklung, im Vakuum bei etwa 10⁻³mbar. Nach der Metallisierung und vor der Aufwicklung wird erfindungsgemäß die Trägerfolie an den Rändern vorzugsweise jeweils um 25 mm besäumt. Einrisse und Falten an den Bahnrändern, die sich z.B. aufgrund des Druckunterschiedes zwischen dem Vakuum in der Bedampfungsanlage und Normaldruck ausbilden, können so idealerweise vollständig entfernt werden.

Wurde die Folie weder nach dem Druckvorgang noch direkt nach der Metallisierung beschnitten, kann dies auch im Zusammenhang mit einem nachfolgenden Demetallisierungsprozess erfolgen. Die Demetallisierung erfolgt vorzugsweise partiell und je nach Prozess wird die bedruckte und metallisierte Folie durch ein Wasserbad, z.B. gemäß der W099/13157, oder durch Ätz- und Neutralisationsbäder geführt. Daher ist ein Bahnlauf einer nassen Folienbahn in der Demetallisierung notwendig. Der Bahnlauf nasser Folien in Druckanlagen ist im Vergleich zu trockenen Folien kritisch, da durch die Feuchtigkeit auf dem Substrat Schlupf in Zuggruppen auftritt. Diese Schlupfeigenschaften können je nach Beladung der Substratoberfläche unterschiedlich sein, wodurch häufig stark schwankende mechanische Belastungen der Bahn in Zuggruppen auftritt. Bei einer Folienbahn mit Falten oder feinen Einrissen in den Folienrändern führen diese Schwankungen leicht zu verstärkter Faltenbildung über die gesamte Folie oder gar zu Folienrissen.

Um die Gefahr der Faltenbildung und der Bahnrisse in Folgeprozessen deutlich zu reduzieren, wird die Folienbahn beim Arbeitsgang der Demetallisierung idealerweise direkt nach dem Abwickler, alternativ aber auch beim Aufwickler, der Demetallisierung an den Rändern besäumt. Dadurch werden feine Einrisse und Falten an den Bahnrändern entfernt.

Die erfindungsgemäße Besäumung der Trägerfolie macht sich in vorteilhafter Weise auch bei dem optional folgenden Kaschiervorgang bemerkbar. Die metallisierte und gegebenenfalls demetallisierte Folie wird zur Erhöhung der chemischen Beständigkeit oft mit einer dünnen Folie, vorzugsweise einer 6 µm dicken Polyesterfolie, kaschiert. Beim Kaschieren können kleinste Falten in den Folienrändern zu durchgehenden Falten im Kaschierverbund führen, die erfindungsgemäß jedoch vermieden werden.

## Patentansprüche

1. Verfahren zur Herstellung von Sicherheitsfolie mit folgenden Schritten:
- Bereitstellen einer Trägerfolie mit Randbereichen und einem Mittelbereich
- Beschichten der Trägerfolie im Mittelbereich,
- Sonderbehandlung der Randbereiche der Trägerfolie zum Vermeiden von Dickenunterschieden zwischen den Randbereichen und dem Mittelbereich der Trägerfolie.

2. Verfahren nach Anspruch 1, **dadurch gekennzeichnet, dass** als Sonderbehandlung die Randbereiche beschichtet werden.

3. Verfahren nach Anspruch 1 oder 2, **dadurch gekennzeichnet, dass** als Sonderbehandlung die Randbereiche so beschichtet werden, dass die Dicke der Beschichtung der Randbereiche im Wesentlichen konstant ist.

4. Verfahren nach Anspruch 1 oder 2, **dadurch gekennzeichnet, dass** als Sonderbehandlung die Randbereiche so beschichtet werden, dass die Dicke der Beschichtung der Randbereiche zum Mittelbereich hin abfällt.

5. Verfahren nach Anspruch 4, **dadurch gekennzeichnet, dass** die Beschichtung der Randbereiche und des Mittelbereichs zumindest teilweise überlappen.

6. Verfahren nach Anspruch 1, **dadurch gekennzeichnet, dass** als Sonderbehandlung die Randbereiche und der Mittelbereich über die gesamte Breite der Trägerfolie mit einer Beschichtung versehen werden.

7. Verfahren nach Anspruch 1, **dadurch gekennzeichnet, dass** als Sonderbehandlung unbeschichtete Randbereiche vom beschichteten Mittelbereich der Trägerfolie abgetrennt werden.

8. Verfahren nach Anspruch 7, **dadurch gekennzeichnet, dass** das Abtrennen der Randbereiche durch mechanisches Schneiden erfolgt.

9. Verfahren nach wenigstens einem der Ansprüche 1 bis 8, **dadurch gekennzeichnet, dass** die Beschichtung des Mittelbereichs durch Bedrucken und/oder Bedampfen mit Metall erfolgt.

10. Verfahren nach wenigstens einem der Ansprüche 1 bis 9, **dadurch gekennzeichnet, dass** die Beschichtung des Mittelbereichs folgende Schritte umfasst
- zumindest teilweises Bedrucken des Mittelbereichs mit einer Lackschicht, in die optional eine Beugungsstruktur geprägt wird,
- Bedampfen des Mittelbereichs mit Metall und optional partielles Demetallisieren zur Erzeugung von Mustern, Zeichen etc.,
- optionales Laminieren der Trägerfolie mit einer weiteren Folie.

11. Verfahren nach Anspruch 10, **dadurch gekennzeichnet, dass** die Abtrennung der Randbereiche nach dem Bedrucken oder nach dem Bedampfen oder nach dem Demetallisieren erfolgt.

12. Vorrichtung zur Herstellung einer Sicherheitsfolie mit folgenden Komponenten:
- Einrichtung, die eine Trägerfolie bereitstellt
- Einrichtung zum Beschichten der Trägerfolie im Mittelbereich,
- Einrichtung zur Sonderbehandlung der Randbereiche der Trägerfolie zum Vermeiden von Dickenunterschieden zwischen den Randbereichen und dem Mittelbereich der Trägerfolie.

13. Vorrichtung nach Anspruch 12, **dadurch gekennzeichnet, dass** die Vorrichtung zur Sonderbehandlung eine Einrichtung zum Abtrennen der Randbereiche von der Trägerfolie ist.

14. Vorrichtung nach Anspruch 12 oder 13, **dadurch gekennzeichnet, dass** die Vorrichtung zur Sonderbehandlung eine Schneidevorrichtung ist.

15. Sicherheitsfolie, hergestellt nach einem Verfahren gemäß wenigstens einem der Ansprüche 1 bis 11.
